(19) Europäisches Patentamt / European Patent Office / Office européen des brevets

(11) **EP 4 742 523 A1**

## (12) EUROPEAN PATENT APPLICATION

(43) Date of publication:
**13.05.2026 Bulletin 2026/20**

(21) Application number: **24211579.8**

(22) Date of filing: **07.11.2024**

(51) International Patent Classification (IPC):
*H02M 3/158* (2006.01)     *H02M 1/00* (2006.01)

(52) Cooperative Patent Classification (CPC):
**H02M 3/158;** H02M 1/0009; H02M 1/0032

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Semtech Corporation
Camarillo CA 93012-8790 (US)**

(72) Inventor: **SURACI, Michele
2000 Neuchâtel (CH)**

(74) Representative: **P&TS SA (AG, Ltd.)
Avenue J.-J. Rousseau 4
P.O. Box 2848
2001 Neuchâtel (CH)**

(54) **SINGLE-INDUCTOR MULTIPLE-OUTPUT DC-DC CONVERTER AND METHOD OF OPERATING**

(57) A SIMO DC-DC converter having a modified buck topology in which multiple output are served from a single inductor. The serving order of the outputs is reversed when the inductor is discharged, such that the inductor current at the end of the serving of an output can be reset to the same value that it had at the beginning of the serving of the same output in the same cycle.

Fig. 2

EP 4 742 523 A1

Fig. 4

**Description**

**Technical domain**

The present invention relates, in embodiments, to power supply and management circuits providing a plurality of power rails, as well as to an algorithm to generate a plurality of independent power levels in a circuit with a single storage inductor.

**Related art**

With increased complexity and integration, power management circuits are more and more required to provide several different power rails for different points of loads and different applications, each with a specific set of requirements. A single integrated circuit or chip may be required to supply power to external companion chips as well as to internal functions, such as low-power radios. These multifunction systems require stable power supplies for both the analogue circuitry and the digital section respecting strict EMI limits for the analogue/radio circuits and providing high-performance load regulation for the digital ones.

Furthermore, high energy efficiency, adaptability of the voltage rails, low cost BOM are expected in most application, particularly in IoT hardware. Meeting all these contrasting requirements is highly challenging.

In today-s market, PMICs (Power Management Integrated Circuits) are highly popular for addressing these requirements. These PMICs often include multiple inductive DC/DC converters, LDOs and other auxiliary functions. These circuits provide significant advantages over single point-of-load (PoL) solution and discrete converter circuits of old.

SIMO (single inductor, multiple output) converters promise even better BOM saving by requiring only one single inductor to provide multiple voltage rails.

Document EP 4387073 A1 discloses a single-inductor, multiple-output DC-DC converter.

**Short disclosure of the invention**

An aim of the present invention is the provision of a multiple output voltage converter that overcomes at least some of the shortcomings and limitations of the state of the art. Embodiments of the invention provide superior performances both in terms of efficiency and of stability, while remaining simple enough for easy integration into high-volume production flows.

According to the invention, these aims are attained by the object of the attached claims, and especially by a single-inductor multiple-output (SIMO) circuit having a modified buck topology in which multiple outputs are selectively and cyclically connectable to a single inductor, characterized in that a serving order of the outputs being reversed when the inductor is discharged, such that the inductor current at the end of the serving of an output can be reset to the same value that it had at the beginning of the serving of the same output in the same cycle.

Dependent claims introduce important aspects of the invention that, while advantageous, are not essential. For example, a structure of a modified buck converter in which a first inductor terminal is connected to a left-side switching circuit with a half-bridge between a power supply terminal and ground, and a second terminal of the inductor is linked to an array of output switches, one per output.

In embodiments, a controller circuit determines the timing of the various switches such that in a first charging part of each cycle the inductor current rises while the output terminals are served one after the other, and in a second discharging part of each cycle the output terminals are served in the reverse order while the inductor current decreases. The timing of the switches is such that at the end of each serving interval of a terminal during the discharging part the current flowing in the inductor returns to the value it had at the beginning of a serving interval for the same output terminal during the charging part.

Many valuable use cases require two independent output terminals, but the number of outputs is not limited in the invention. They may be two, three or more. As to the switches, they may be implemented with MOS transistors.

The converter may operate in a fixed-frequency cycle, which may be advantageous for EMI, or in a variable-frequency mode where needed. In the former case, it may be advantageous to introduce a freewheeling phase in each cycle, such that the converter can operate in discontinuous current mode at low load without changing the frequency. The freewheeling mode may be triggered by a zero current detector and involves isolating the inductor from the switching circuits on the right side or on both sides (the switches are put in a high-impedance state) and possibly activating a bypass switch short-cutting the inductor to allow the decay of residual currents.

The timing of the charging part of each cycle may be determined by a modulator, such as a V-T converter, a PWM circuit, that operates on an error signal derived from the comparison of the output voltage with a reference value. This establishes a feedback control loop that regulates the output voltages at the desired values. PI or PID compensators may be included in the feedback loop.

The invention also relates to a method of operating a single-inductor multiple-output (SIMO) DC-DC converter comprising a cycle of operation including a charging part, in which the a first terminal of the inductor is connected to potential higher than the output potentials such that the current flowing in the inductor rises and a discharging part, in which the first terminal is connected to a lower potential such the current flowing in the inductor decreases, while a second terminal of the inductor is switched to one of the output terminals at a time following a serving order during the charging part and following a reverse order during the discharging part, such that at the end of each serving interval of a terminal during the discharging part the current flowing in the inductor returns to the value it had at the beginning of a serving interval for the same output terminal during the charging part.

Preferably, the current flowing in the inductor in each cycle at the end of serving an output is reset to the same value it had at the beginning of serving the same output in the same cycle.

The method may include storing a value of the inductor current at the beginning of a serving of an output in the charging part and terminating a serving of the same output in the discharging part when the inductor current reaches the stored value. In embodiments, however, the resetting of the current can be achieved by estimating the time at which the right current value is attained.

## Short description of the drawings

Exemplar embodiments of the invention are disclosed in the description and illustrated by the drawings in which:

Figure 1 illustrates schematically a packaged SIMO converter serving multiple loads.

Figure 2 shows schematically the topology of a SIMO converter according to the present invention.

Figure 3 represents four cyclic stages of operation of the converter of the invention, in a two-output implementation.

Figure 4 plots the inductor current during one cycle, as well as the corresponding ramp voltages.

Figure 5 plots the inductor current response to load change.

Figure 6 is a simplified diagram of the architecture of a converter according to the invention.

Figure 7 presents two equivalent circuits;

Figures 8 shows graphically some mathematic relations.

Figures 9 and 10 are spectra resulting from simulations of the inventive converter

Figure 11 and 12 are simplified diagrams of a type II PI, respectively of a type III PID compensator.

Figure 13 plots the response of a circuit according to the invention to a transient load change.

In the figures, remarkable elements are identified by reference signs that are repeated in the text. The same reference sign may be used to identify distinct elements that are identical, similar, logically related, or technically equivalent. When many identical, similar, related or equivalent elements occur on a drawing, some reference signs may have been omitted to avoid cluttering the figure.

## Examples of embodiments of the present invention

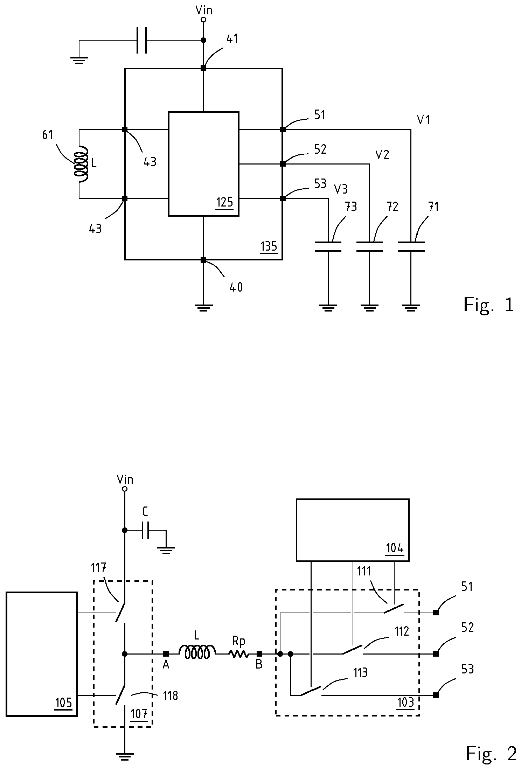

**Figure 1** is a representation of a packaged multiple-output power supply circuit 130 according to the invention. The packaged device 135 provides terminals 43 to connect a suitable inductor 61 and includes a voltage converter circuit 125 that provides three stabilised DC rails at predetermined voltage values on the three output terminals 51, 52, 53. The circuit derives its energy from a power supply input 41. The external loads 71, 72, 73 are represented by their respective capacitive components only, but they may include also resistive and inductive components of impedance as well. Advantageously, the device 135 only needs one external inductor 61 to generate all the output voltages. The number of output voltages is not limited to three.

According to the invention, the converter circuit 125 is an inductive step-down converter that may be regarded as a modified buck converter. **Figure 2** represents its topology in a simplified and idealised manner. On the left side of the inductor, the half-bridge 107 comprises two programmable switches, one between the input voltage Vin and a "A" node, the other between the "A" node and ground. Typically, the switches will be realised with MOS transistors. A half-bridge driver 105 provides the commutation signals for the half-bridge, as it will be disclosed later.

On the right side of the inductance L-which is represented together with its parasitic resistance $R_p$-the output switching circuit 103 and the corresponding output driver 103 connect the "B" node to the outputs 51-53 in turn.

Importantly, the half-bridge driver and the output driver are specially configured to provide good regulation and cross-regulation of all the served outputs. Ideally, the voltage at each output should be independent from the corresponding current, in stationary situations and in transient. Typically, the quality of regulation is expressed as a load regulation parameter, measured in [mV/mA] (or in Ohms), that indicates how much the voltage deviates from the nominal value as the load current varies. The cross-regulation is often quantified by a parameter having the same dimensions of [mV/mA] that indicates the voltage change at one of the outputs caused by the current drawn at another output.

The following examples will show a 2-output implementation of the inventive converter, but the invention is modular and, rather than being limited to two or three outputs, is designed with the flexibility to extend and manage additional outputs as needed. The invention proposes a control circuit that is uniform across all the served output and allows for interchangeable serving order. The controller can maintain the regulation across the whole specified ranges of current and voltage without resorting to abrupt "digital" decisions and can transition from no-load to full-load situations on any of the served output smoothly and gracefully, limiting the disturbances to other served outputs. When the current demands reach the limit condition, the controller can fall back to a degraded mode with a lower number of regulated voltages gracefully, "skipping" other outputs as needed.

Preferably, the controller of the invention operates in fixed-frequency mode. While this is not the only possibility, this choice simplifies the logic and the control of unwanted emissions, important for wireless devices. Variable frequency operation may be advantageous in some cases, for example when cross-regulation is especially important, and is included in the frame of the invention.

The Buck-like architecture of the converter offers direct energy transfer to the loads, insofar there is always a DC path available between the "B" node and one output. This enhances the energy efficiency.

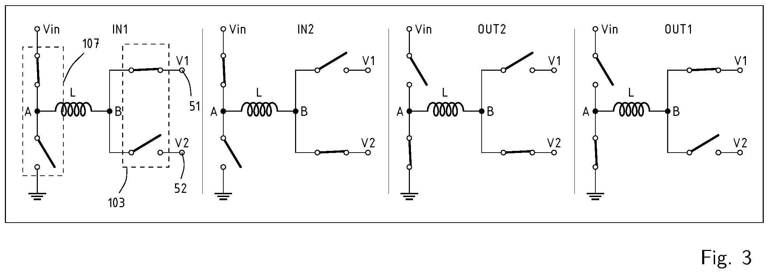

**Figure 3** illustrates some important aspects of the switching algorithm of the invention. The position of the switches is shown in four successive phases of a cycle. The first part of the cycle comprising the phases IN1 and IN2 is a charging segment, in which the upper switch of the half-bridge 107 is closed and the node "A" is at potential Vin. The second part of the cycle with the phases marked OUT2 and OUT1, on the other hand, is a discharging part: the states of the switches of the half-bridge 107 are exchanged such that the node "A" is tied to the ground by the lower switch, while the upper switch is open.

The output switches 103 determine which output is served: the first output 51 is served in phases denoted IN1 and OUT1 and the second output 52 is served in phases IN2 and OUT2. The serving order in the discharge segment is the reverse of the serving order in the charging segment, such the last output that is served in the charging segment is the first to be served in the discharging one, and so on. The figure shows only two output rails 51 and 52, but the invention can be extended to an arbitrary number of outputs.

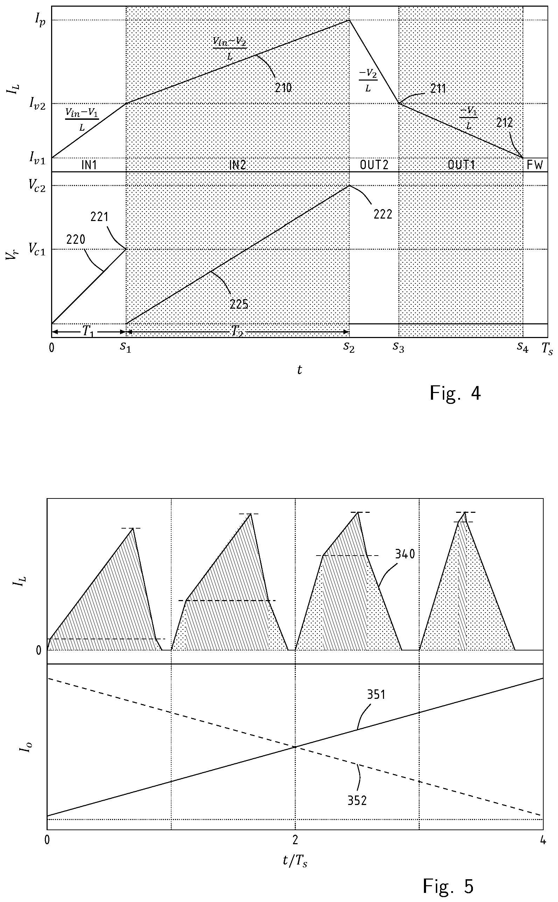

**Figure 4** is a plot of the inductor current $I_L$ (line 210, upper half) during a cycle of the converter, between $t = 0$ and $t = T_s$. Disregarding parasitic resistances, the current rises and falls linearly according to the difference of potential across the inductance.

The duration $T_1$ of IN1 is determined by a voltage-time converter driven by compensators fed by an error signal on the voltage output $V_1$. The lower plot shows a possible implementation of this function by means of constant-slope voltage ramps. When the ramp 220 crosses the value of the compensator signal $V_{c1}$ (point 221 in the plot, $t = s_1$), a trigger circuit determines the end of the IN1 phase. In this phase, the current increases with a slope $(V_{in} - V_1)/L$, where $L$ denotes the inductance value. This phase represents an energy accumulation and transfer to the first output voltage.

The duration $T_2$ of IN2 is determined (point 222 in the plot, $t = s_2$) by a second converter with a second ramp 225 starting as soon as the first phase is over. The second converter is driven by the signal $V_{c2}$ of a second compensator sensing an error signal on the second voltage output $V_2$. In the IN2 interval, the slope is $(V_{in} - V_2)/L$ and the current reaches at $t = s_2$ the maximum value $I_p$. This phase represents an energy accumulation and transfer to the second output voltage.

In the example, the voltage-to-time transfer function of the modulator is

$$T_1 = V_{c1} \cdot \frac{T_s}{V_{R1}} \qquad T_2 = V_{c2} \cdot \frac{T_s}{V_{R2}}$$

where $V_{R1}$, $V_{R2}$ are design parameters of the modulators containing the ramp slopes. They are equal to the voltage that the ramp 220, respectively 225 would reach if their widths were equal to one switching period $T_s$.

The conversion from $V_{c1}$, $V_{c2}$ to durations $T_1$, $T_2$ could be achieved by any form of modulator circuits configured to convert an input voltage or current value into a pulse width, without leaving the scope of the invention.

The OUT2 phase is terminated at $t = s_3$ (point 211) when the inductor current reaches again the value $I_{v2}$ that it had

at the beginning of corresponding charging phase IN2 for the same output. In this manner, the inductor current, which represents the state variable of the system, is effectively reset to the value existing before the second output was served. This can be achieved by reading the value $I_L = I_{v1}$ at $t = s_1$ at the beginning of IN2 and then letting OUT2 run until the same threshold is hit again $I_L = I_{v1}$ at $t = s_3$. During this phase, the inductor current decreases with a slope $-V_2/L$. In an ideal approximation, the energy stored in the inductor during the IN2 phase is delivered to the second voltage output. In a real implementation, of course, a small amount of energy will be lost due to nonidealities in the inductor and in the switches (which can be modelised, for example, by the Rp parasitic resistor of figure 2).

In possible variants of the invention, the position of t = $s_3$ can be estimated from $T_1$, $T_2$ since the slopes are in principle known, without a physical current sensor.

The converter of the invention can operate in continuous current mode (CCM) or else in discontinuous current mode (DCM) where the initial inductor current $I_{v1} = 0$. Preferably the converter comprises a zero-current detector to signal a DCM condition, in which case the cycle may include a final freewheeling (FW) phase where all the switches in the half-bridge 107 and in the right block 103 are set into their high-impedance (open) state. Preferably, the converter of the invention includes a freewheeling switch that shorts the inductors in this phase. The duration of the freewheeling phase is determined by the requirement that the switching period $T_s$, and the switching frequency $f_s = 1/T_s$ are constant.

The last discharge phase OUT1 serves the same output that was served at the beginning of the cycle, in discharge mode. During this phase, the current decreases with slope $-V_1/L$. Differently from OUT2 and eventual other previous discharge phases. this phase extends to the end of a switching cycle at $t = T_s$ or to a time when the zero-current detector signals that the inductor current has reached zero, as in the example at t = $s_4$ (point 212).

In a stationary situation where the load currents do not change, and the controller has reached a steady operating point, the current at the end last phase will implicitly reach the initial value $I_L = I_{v1}$ at the end of a cycle. In transients, the final current will not necessarily be the same as the beginning. This allows the system to evolve in CCM and eventually find another steady state with a different average inductor current, as the loads require.

The "current reset" principle, positing that at the end of the serving of one output the inductor current returns to the same that existed at the beginning of the serving proved to be very successful in guaranteeing good stability and cross-regulation performances. Importantly, in this topology, the only continuous state variable of the converter is the inductor current; hence, the current reset principle guarantees that each serving of each output restores the initial state. The timing algorithm is completely symmetric with respect to the outputs, each of which is treated equally. This way, no differences in the control dynamics are expected.

The controller of the invention can adapt automatically to different and variable load conditions of the two outputs, converging at the limit towards single-phase functioning where only one output is served, like in a conventional buck-type converter.

**Figure 5** shows the result of a simulation in which the currents drawn from the two outputs are variable in opposite directions. Plot 351 is the evolution of the current drawn from output V1, showing a linear increase, while plot 352 is the current drawn from output V2 with a linear decrease. Plot 340 is the evolution of the inductor current along four switching cycles. The serving of the V1 and V2 are highlighted in different patterns, dotted for the former, and hatched for the latter. Physically, the highlighted areas represent the charge being provided to each output. The plot is somewhat ideal, in that the bandwidth of the compensators is not considered. In a real situation, more switching cycles would be needed to follow abrupt load changes. Nonetheless, the simulation shows how the controller copes with this dynamic situation, starting from a single-phase state where essentially only V2 is served and ending in the complementary single-phase state where only V1 is served.

Remarkably, the control loop switches naturally from a single-phase state to the complementary single-phase state in a continuous and natural manner, passing through the intermediate states without sudden changes induced by "digital" decisions. Some digital programmability to enable or disable certain outputs at will may be included, however. For example, this feature may be used to achieve special low-power or low-noise modes.

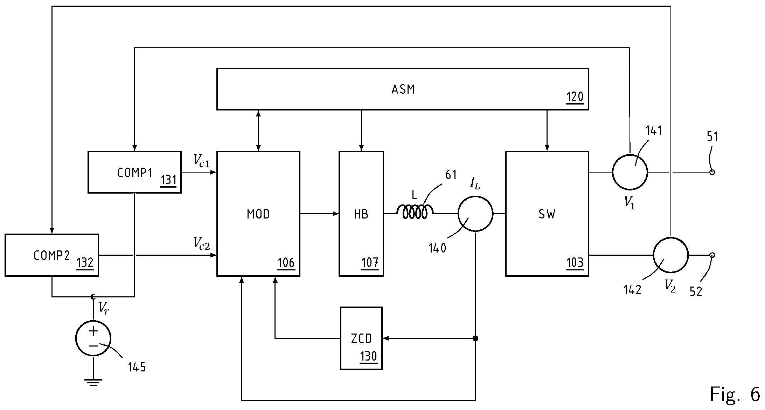

**Figure 6** is a simplified schematic of an architecture implementing the control loop sketched above. The inductor 61, half-bridge 107 and output switches arrangement 103 are recognizable in the centre of the picture.

The modulator 106 receives the signals $V_{c1}$, $V_{c2}$ from the compensators 131, 132 and generates control pulses with suitable widths $T_1$, $T_2$ for driving the half-bridge 106. The modulator 106 receives also a current signal from a suitable current transducer 140 and implements the "current reset" feature, either by latching the values $I_{v1}$, $I_{v2}$ at the beginning of the IN1, IN2 phases and comparing them with the instantaneous values of $I_L$ to end the phases OUT2, respectively OUT1, or through some form of estimation.

The zero-current detector 130 receives the current signal and, when the current hits zero, signals the DCM condition to the modulator that puts the switches in high-Z mode.

The architecture includes an asynchronous state machine 120 that receives input signals from the modulator and delivers the switching algorithm to the switches.

Finally, the architecture includes separate control loops for each voltage output, each with a compensator 131, 132 receiving the corresponding voltage value from voltage sensors 141, 142 and comparing them with desired values linked to a reference voltage 145. The example shows a voltage-mode control in which the compensators generate voltage signals $V_{c1}$, $V_{c2}$, but current control is also a possibility.

Operating point

Our goal is to find a solution for the steady-state condition of the regulator of the invention. Preferably a closed form one that is modular and scalable to an arbitrary number of outputs. We will consider the continuous conduction mode (CCM) only. The DCM mode can be treated similarly.

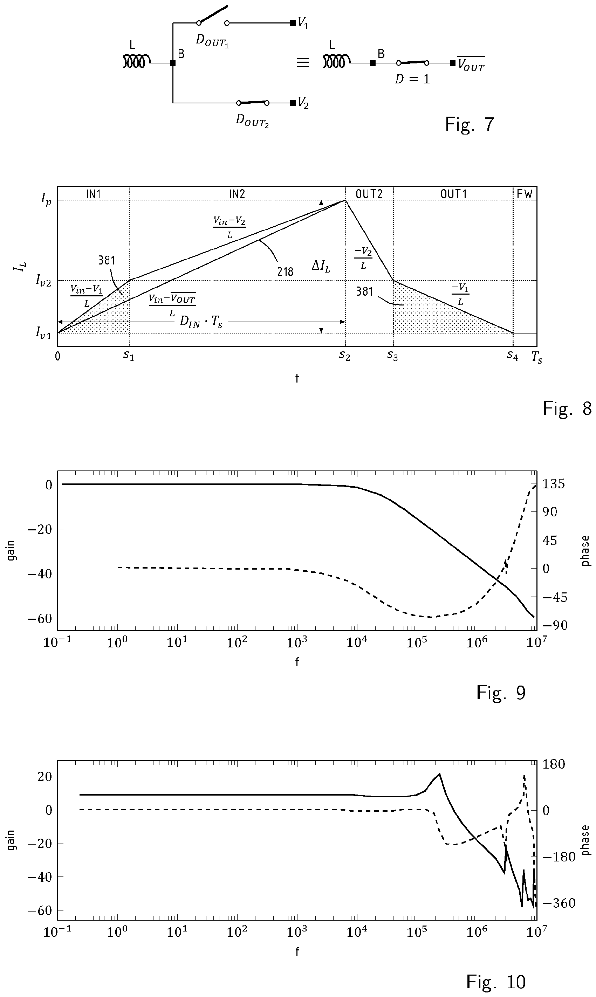

In the following we consider $D_{IN_i}$, $D_{OUT_i}$ as the generic duty cycle for the input and output switches where i is an output index. $D_X = T_X/T_S$ is the ratio between the on-time of the corresponding switches and the switching period $T_s$. We define an "average output voltage" $\overline{V_{OUT}}$. **Figure 7** represents two circuits that are equivalent "on average", for the determination of the working point. On the left is the topology of figure 2, with two output switches with duty cycles $D_{OUT_1}$, $D_{OUT_2}$ and output voltages $V_1$, $V_2$. This is equivalent to the circuit on the right side where there is only one switch that is permanently close ($D = 1$) and the output voltage $\overline{V_{OUT}}$.

The equivalence can be imposed by equating the average voltage $V_B$ at the "B" node in the two representations.

$$V_B(\text{left}) = \sum_i V_i D_{OUT_i} = \overline{V_{OUT}} = V_B(\text{right})$$

therefore

$$\overline{V_{OUT}} = \sum_i V_i D_{OUT_i}$$

The average output voltage will be given by each output voltage weighed by the time the corresponding switch is closed. It's an average integral. The average output current can be derived applying Kirkhoff's current law:

$$\overline{I_{OUT}} = \sum I_{OUT_i}$$

Extending the equality to the output power one obtains:

$$\overline{P_{OUT}} = \overline{V_{OUT}} \cdot \overline{I_{OUT}} = \sum V_{OUT_i} I_{OUT_i} = \sum P_{OUTi}$$
$$\rightarrow \overline{V_{OUT}} = \frac{\overline{P_{OUT}}}{\overline{I_{OUT}}}$$

Therefore, considering the averages, the SIMO converter of the invention behaves like a buck converter and:

$$\overline{V_{OUT}} = V_{IN} \cdot D_{IN}$$

and

$$D_{IN} = \frac{\overline{V_{OUT}}}{V_{IN}}$$

Using previously defined equations one obtains

$$D_{IN} = \frac{\sum P_{OUT_i}/\sum I_{OUT_i}}{V_{IN}}$$

Assuming theoretically 100% efficiency $P_{OUT} = P_{IN}$, the average inductor current will be:

$$\overline{I_L} = \frac{I_{IN}}{D_{IN}} = \frac{P_{IN}}{V_{IN}} \cdot \frac{1}{D_{IN}} = \frac{P_{OUT}}{V_{IN}D_{IN}}$$

With the input duty cycle, we also find the value for the current ripple $\Delta I_L$:

$$\Delta I_L = D_{IN}T_S \frac{V_{IN} - \overline{V_{OUT}}}{L}$$

The base current $I_{vi}$ can be derived from the two equations above

$$I_{v_1} = \overline{I_L} - \frac{\Delta I_L}{2}$$

**Figure 8** shows graphically the operations in the previous paragraphs, to calculate the valley current. The line 218 is a constant-slope ramp that, starting from I = $I_{v1}$ reaches the maximum current $I_p$. Its duration is $D_{IN} \cdot T_s$, the height is $\Delta I_L$ and the slope is ($V_{IN}$ - $\overline{V_{OUT}}$)/L.

To compute duty cycle for the first output $D_{IN1}$ one can put in place a charge balance between the current sunk from the first output (multiplied by the switching period) and the area subtended by the inductor current when the first output is indeed served. Graphically, these are visible as dashed areas 381 in figure 8.

Expressing the equation shows:

$$I_{OUT_1} = I_{v1} \cdot D_{IN1} \frac{V_{IN}}{V_{OUT1}} + \frac{D_{IN1}^2 V_{IN}(V_{IN} - V_{OUT_1})}{V_{OUT_1} 2Lf_s}$$

Leading to:

$$D_{IN_1} = \frac{-I_{v1} + \sqrt{I_{v1}^2 - \dfrac{2V_{OUT1}(V_{IN} - V_{OUT_1})I_{OUT_1}}{V_{IN}Lf_s}}}{\dfrac{V_{IN} - V_{OUT_1}}{Lf_s}}$$

And in general, extending to a generic output i:

$$D_{IN_i} = \frac{-I_{v_i} + \sqrt{I_{v_i}^2 - \dfrac{2V_{OUT1}(V_{IN} - V_{OUT_i})I_{OUT_i}}{V_{IN}Lf_s}}}{\dfrac{V_{IN} - V_{OUT_i}}{Lf_s}}$$

This last equation establishes the duty cycle of the generic $IN_i$ phase, while the phase $OUT_i$ will be:

$$D_{OUT_i} = D_{IN_i} \cdot \frac{V_{IN} - V_{OUT_i}}{V_{OUT_i}}$$

With this result, the analysis of the DC operating point of the system is completed.

Dynamic behaviour

The dynamic behaviour of the converter is better studies with simulation tools. It is important to consider separately DCM modes and CCM ones, because the transfer function of the system changes considerably. In DCM mode the inductor current-which is the system state variable-returns to zero cyclically. This reduces the open loop dynamics from the third order to the first one. **Figure 9** shows the transfer function calculated between the "A" node and the output V2. The gain (solid line) shows a 20 dB/decade drop, typical of $1^{st}$ order systems, even if the capacitances present in the system would suggest a $3^{rd}$ order behaviour. The $3^{rd}$ order behaviour appears in **Figure 10** that shows the same transfer function calculated in a simulation with a higher current draw that brings the converter in CCM mode.

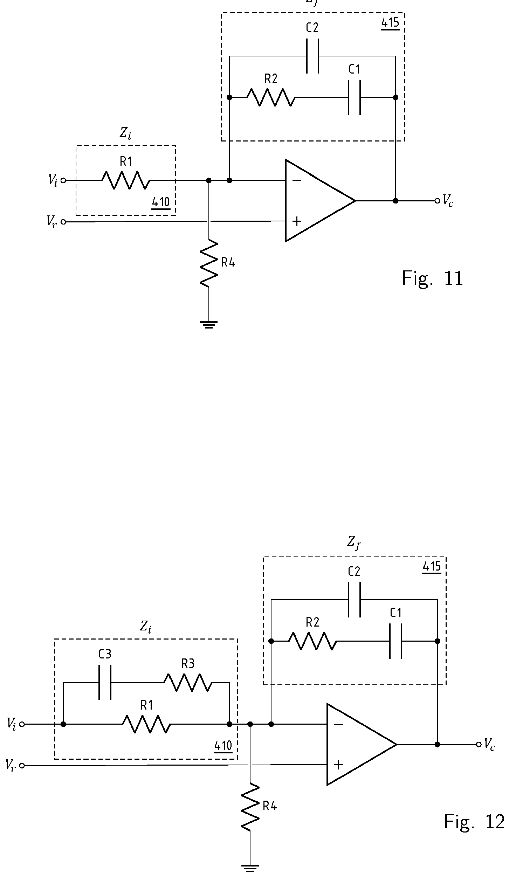

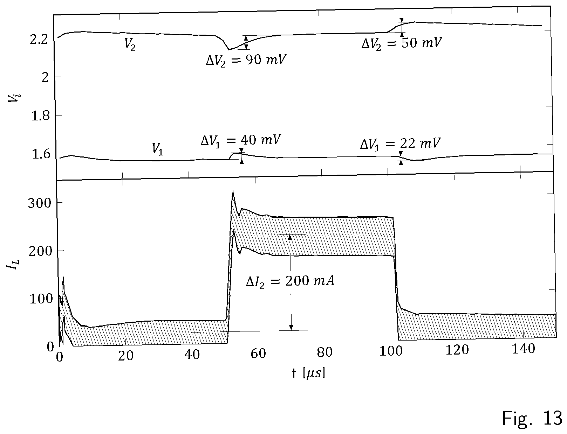

**Figures 11 and 12** show two possible compensation circuits for the compensators 131, 132. The circuit of figure 11 is a type II compensator of the PI type. its output is proportional to the input $V_i$ and to its integral, thanks to the integration capacitors in the feedback branch 415. The circuit of figure 12 is a type-III compensator. It adds a capacitive path in the input branch 410 and, thanks to that, exhibits a PID behaviour. The PID compensator of figure 13 provides better regulation and stability with in CCM mode.

**Figure 13** plots the response of a circuit according to the invention to a transient change in the current drawn from the second output $\Delta I_2$ = 200 mA. The lower plot shows the variation of the inductor current $I_L$-as envelope, since the switching carrier is not resolved-showing the transition from the discontinuous mode to the continuous mode during the transient. The upper part plots the corresponding changes in the output voltages $V_1$ and $V_2$. In terms of load regulation and cross-regulation, the converter of the invention has transient supply variation of 4% and a cross-regulation transient supply variation of 2.5%.

The controller of the invention allows fixed frequency operation as well as variable frequency operation. The former is advantageous in terms of EMI. The noise radiated and conducted-especially by the inductor and battery current-can be well controlled inside the multiples of the switching frequency. It is common to set upper and lower limits to the duty cycles, to avoid nonlinearities that arise near 0% and 100%. Beyond these limits, the controller necessarily skips some output serving and this give rise to subharmonics of the fundamental switching frequency in the EMI spectrum.

**Reference symbols in the figures**

| | |
|---|---|
| 40 | ground pin |
| 41 | voltage supply pin |
| 43 | inductor pin |
| 51 | output pin |
| 52 | output pin |
| 53 | output pin |
| 61 | inductor |
| 71 | load |
| 72 | load |
| 73 | load |
| 103 | output switches |
| 104 | controller of the output switches |
| 105 | driver |
| 107 | half bridge |
| 117 | high-side switch |
| 118 | low-side switch |
| 120 | asynchronous state machine |
| 125 | SIMO converter |
| 130 | zero current detector |
| 131 | compensator |
| 135 | packaged device |
| 140 | current detector |
| 141 | voltage detector |
| 142 | voltage detector |
| 210 | inductor current |
| 211 | switch point |
| 212 | switch point |
| 218 | average current ramp |
| 221 | V-T conversion ramp |
| 221 | trigger point |
| 222 | trigger point |
| 225 | V-T conversion ramp |

318    subtended area
340    inductor current
351    current draw 1
352    current draw 2
410    input branch
415    feedback branch

**Claims**

1. A single-inductor multiple-output (SIMO) circuit having a modified buck topology in which multiple outputs (51, 52, 53) are selectively and cyclically connectable to a single inductor (61), **characterized in that** a serving order of the outputs being reversed when the inductor (61) is discharged, such that the inductor current at the end of the serving of an output can be reset to the same value that it had at the beginning of the serving of the same output in the same cycle.

2. The circuit of the preceding claim, in which a first inductor terminal (A) is connected to a left-side switching circuit (107) operable to inject a current into the inductor from a power supply terminal (41) or from a ground terminal (40), a right-side switching circuit (103) operable to connect a second terminal (B) of the inductor to one of a plurality of output terminals (51, 52, 53), and a control circuit (104, 105) configured to operate cyclically the left-side switching circuit (107) and the right-side switching circuit (103) such that potentials of the output terminals are stabilised to predetermined voltage values, a cycle of operation of the control circuit (104, 105) including a charging part, in which the left-side switching circuit (107) is operated such that the current flowing in the inductor rises and a discharging part, in which the left-side switching circuit is operated such the current flowing in the inductor decreases, **characterized in that**
the control circuit (104, 105) is configured to select with the right-side switching circuit (103) is operated one of the output terminals at a time following a serving order during the charging part and following a reverse order during the discharging part, and to time the left-side switching circuit (107) and the right-side switching circuit (103) such that at the end of each serving interval of a terminal during the discharging part the current flowing in the inductor returns to the value it had at the beginning of a serving interval for the same output terminal during the charging part.

3. The circuit of the preceding claim, the left-side switching circuit (107) comprising a half-bridge with a high-side switch (117) and a low-side switch (118) operable to allow a current flow between the first terminal (A) of the inductor and the power supply (61), respectively between the first terminal (A) and ground (40).

4. The circuit of any one of the preceding claims, the right-side switching circuit comprising a plurality of output switches (111,112,113) each operable to connect the second terminal (B) of the inductor to one of the terminals (51, 52, 53).

5. The circuit of any one of the preceding claims, the output terminals being in number of two, three or more.

6. The circuit of any one of the preceding claims, the cycle of the control circuit having a fixed frequency.

7. The circuit of any one of the preceding claims, comprising a zero-current detector, (130) the control circuit (106) being configured to activate a freewheeling mode when the zero-current detector signals that the inductor current reaches zero, in which freewheeling mode the right-side and the left-side are set in an high impedance mode and a bypass switch is closed short-circuiting the inductor.

8. The circuit of any one of the preceding claims, comprising for each voltage output a feedback loop including a modulator providing a timing signal for the left-hand switching circuit and/or for the right-hand switching circuit driven by an error signal derived from the comparison of the output voltage with a reference value.

9. The circuit of the preceding claim, the feedback loop including a PI compensator or a PID compensator.

10. A method of operating a single-inductor multiple-output (SIMO) DC-DC converter comprising a cycle of operation including a charging part, in which the a first terminal (A) of the inductor is connected to potential higher than the output potentials such that the current flowing in the inductor rises and a discharging part, in which the first terminal is connected to a lower potential such the current flowing in the inductor decreases, while a second terminal (B) of the inductor is switched to one of the output terminals at a time following a serving order during the charging part and following a reverse order during the discharging part, such that at the end of each serving interval of a terminal during the discharging part the current flowing in the inductor returns to the value it had at the beginning of a serving interval for the same output terminal during the charging part.

11. The method of the preceding claim, in which the current flowing in the inductor in each cycle at the end of serving an output is reset to the same value it had at the beginning of serving the same output in the same cycle.

12. The method of any one of claims 10-11, the output terminals being in number of two, three or more.

13. The method of any one of claims 10-12, the cycle of the control circuit having a fixed frequency.

14. The method of any one of claims 10-13, comprising activating a freewheeling mode when the inductor current reaches zero, in which the inductor is not connected to the output terminals and is short-circuited by a bypass switch.

15. The method of any one of claims 10-14, comprising storing a value of the inductor current at the beginning of a serving of an output in the charging part and terminating a serving of the same output in the discharging part when the inductor current reaches the stored value, or the method comprising estimating a time when the inductor current serving an output in the discharging part will reach the same value it had at the beginning of serving the same output in the charging part and terminating a serving of the output at the estimated time.

16. The method of any one of claims 10-15, comprising generating a timing signal for connecting the first terminal (A) to the higher potential or to the lower potential based on an error signal derived from the comparison of one output voltage with a reference value.

Fig. 1

Fig. 2

Fig. 3

Fig. 4

Fig. 5

Fig. 6

Fig. 7

Fig. 8

Fig. 9

Fig. 10

Fig. 11

Fig. 12

$\Delta V_2 = 90\ mV$

$\Delta V_2 = 50\ mV$

$V_2$

$V_1$

$\Delta V_1 = 40\ mV$

$\Delta V_1 = 22\ mV$

$\Delta I_2 = 200\ mA$

t [$\mu s$]

Fig. 13

Europäisches
Patentamt

European
Patent Office

Office européen
des brevets

# EUROPEAN SEARCH REPORT

**Application Number**

EP 24 21 1579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/333155 A1 (YANG WEN-HAU [TW] ET AL) 3 October 2024 (2024-10-03) | 1-6, 8-13,15, 16 | INV. H02M3/158 |
| Y | * abstract * * paragraph [0004]; figures 1, 2 * ----- | 7,14 | ADD. H02M1/00 |
| X | US 9 203 310 B2 (NAT UNIV CHUNG CHENG [TW]) 1 December 2015 (2015-12-01) | 1-6, 8-13,15, 16 | |
| Y | * abstract; figures 2-6 * ----- | 7,14 | |
| Y | GOH TAE YOUNG ET AL: "Single Discharge Control for Single-Inductor Multiple-Output DC-DC Buck Converters", IEEE TRANSACTIONS ON POWER ELECTRONICS, [Online] vol. 33, no. 3, 1 March 2018 (2018-03-01), pages 2307-2316, XP055979799, USA ISSN: 0885-8993, DOI: 10.1109/TPEL.2017.2700483 Retrieved from the Internet: URL:https://ieeexplore.ieee.org/stampPDF/g etPDF.jsp?tp=&arnumber=7917332&ref=aHR0cHM 6Ly9pZWVleHBsb3JlLmllZWUub3JnL2Fic3RyYWN0L 2RvY3VtZW50Lzc5MTczMzI=> [retrieved on 2022-11-09] | 7,14 | |
| A | * abstract * * Section II.A PWM-based SIMO; figure 3 * ----- | 1-6, 8-13,15, 16 | TECHNICAL FIELDS SEARCHED (IPC) H02M |

The present search report has been drawn up for all claims

| Place of search | Date of completion of the search | Examiner |
|---|---|---|
| The Hague | 23 March 2025 | Van der Meer, Paul |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................

& : member of the same patent family, corresponding
   document

EPO FORM 1503 03.82 (P04C01)

**EP 4 742 523 A1**

## ANNEX TO THE EUROPEAN SEARCH REPORT
## ON EUROPEAN PATENT APPLICATION NO.

EP 24 21 1579

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2025

| Patent document cited in search report | | Publication date | Patent family member(s) | | Publication date |
|---|---|---|---|---|---|
| US 2024333155 | A1 | 03-10-2024 | TW | 202439766 A | 01-10-2024 |
| | | | US | 2024333155 A1 | 03-10-2024 |
| US 9203310 | B2 | 01-12-2015 | TW | 201503564 A | 16-01-2015 |
| | | | US | 2015008742 A1 | 08-01-2015 |

For more details about this annex : see Official Journal of the European Patent Office, No. 12/82

## REFERENCES CITED IN THE DESCRIPTION

### Patent documents cited in the description

- EP 4387073 A1